**Europäisches Patentamt**

**European Patent Office**

**Office européen des brevets**

(19)

(11) Veröffentlichungsnummer: **0 005 466**
**B2**

(12) # NEUE EUROPÄISCHE PATENTSCHRIFT

(45) Veröffentlichungstag der neuen Patentschrift:
**02.09.87**

(51) Int. Cl.⁴: **C 08 G 69/46**

(21) Anmeldenummer: **79101260.2**

(22) Anmeldetag: **26.04.79**

(54) **Verfahren zur Herstellung von monomer- und dimerarmen Polyamiden.**

(30) Priorität: **18.05.78 DE 2821686**

(43) Veröffentlichungstag der Anmeldung:
**28.11.79 Patentblatt 79/24**

(45) Bekanntmachung des Hinweises auf die Patenterteilung:
**27.04.83 Patentblatt 83/17**

(45) Bekanntmachung des Hinweises auf die Entscheidung
über den Einspruch:
**02.09.87 Patentblatt 87/36**

(84) Benannte Vertragsstaaten:
**BE CH DE FR GB IT NL**

(56) Entgegenhaltungen:
**DE-A-1 720 661**
**DE-A-1 949 911**
**DE-A-2 503 308**
**GB-A-827 703**
**US-A-4 013 626**

(73) Patentinhaber: **BAYER AG, Konzernverwaltung RP
Patentabteilung, D-5090 Leverkusen 1 Bayerwerk
(DE)**

(72) Erfinder: **Lehr, Günter, Dr., Bethelstrasse 17,
D-4150 Krefeld (DE)**
Erfinder: **Hucks, Uwe, Am Marienstift 30, D-4234
Alpen (DE)**
Erfinder: **Vernaleken, Hugo, Dr., Kreuzbergstrasse
147, D-4150 Krefeld (DE)**
Erfinder: **Nielinger, Werner, Dr., Bärenstrasse 21,
D-4150 Krefeld (DE)**
Erfinder: **Tresper, Erhard, Dr., Dahler Dyk 154,
D-4150 Krefeld (DE)**

EP 0 005 466 B2

## Beschreibung

Die Erfindung betrifft ein Verfahren zur Herstellung von monomer- und dimerarmem Polyamid-6 monomer- und dimerarmen Copolyamiden, die zumindest aus 60 Gew.-% -Caprolactameinheiten bestehen, durch Abtrennen der niedermolekularen Reaktionsprodukte und des nicht umgesetzten ε-Caprolactams aus der Polycaprolactamschmelze unter Anwendung von Unterdruck und erhöhten Temperaturen.

Die hydrolytische Polymerisation von ε-Caprolactam verläuft bis zu einem temperaturabhängigen Gleichgewicht, bei dem bei den üblichen Arbeitstemperaturen von 240-280°C und üblichen Wasserzugaben der Gehalt an ε-Caprolactam und niedermolekularen Reaktionsprodukten (Oligomeren) 7 bis 14 % beträgt. Dieser Gehalt wird, da das ε-Caprolactam und die Oligomeren mit Wasser extrahierbar sind, auch als Extraktgehalt bezeichnet.

Das Polyamid-6 muss vor der weiteren Verarbeitung weitgehend von den niedermolekularen Reaktionsprodukten und dem nicht umgesetzten ε-Caprolactam befreit werden, da diese Anteile u.a. die mechanischen Eigenschaften der Polyamidformkörper verschlechtern. Hierfür sind verschiedene Verfahren bekannt: So werden z. B. aus der Gleichgewichtsschmelze Granulate hergestellt, die mit Wasser in Extraktionsanlagen von dem ε-Caprolactam und den Oligomeren befreit werden. Bei diesem Verfahren ist eine anschliessende Trocknung der Granulate und eine Aufarbeitung des ε-Caprolactam- und Oligomer-haltigen Abwassers erforderlich. Der Aufwand für diese Verfahrensschritte und der Energiebedarf sind hoch.

Weiter sind Verfahren bekannt, die vor dem Abspinnen der Schmelze den Extraktgehalt reduzieren. So werden z. B. durch Gase, die mit der Schmelze in Kontakt gebracht oder in dieser erzeugt werden, gegebenenfalls bei gleichzeitiger Anwendung von Unterdruck die Extraktgehalte abgesenkt (DE-A-2461900, 2461901, 2461902, 2508077, 2509901). Weiter werden Verfahren beschrieben, bei denen eine reine Vakuumbehandlung in an sich bekannter Weise in Schneckenmaschinen oder Dünnschichtverdampfern vorgenommen wird. Bei der technischen Ausführung der genannten Verfahren liegt eine besondere Schwierigkeit darin, dass beim Ausdampfen des nicht umgesetzten ε-Caprolactams auch oligomere Reaktionsprodukte, im wesentlichen Dimeres, frei werden.

Besonders das cyclische Dimere des ε-Caprolactams besitzt Eigenschaften, die den technisch notwendigen kontinuierlichen Ausdampfprozess stören. So sublimiert es leicht, sein Schmelzpunkt liegt mit 341°C sehr hoch und seine Löslichkeit in ε-Caprolactam ist gering (0,6 % bei 80°C, 1,1 % bei 100°C). Es kommt daher leicht in den Kondensatorsystemen der Ausdampfapparaturen zu Abscheidungen von im wesentlichen cyclischen Dimeren, so dass Verstopfungen auftreten können, die zu Unterbrechungen des Ausdampfprozesses führen.

Zur Umgehung dieser Schwierigkeiten sind viele Vorschläge bekannt, so beispielsweise die Verwendung von Kondensatoren, die mit Kratzeinrichtungen versehen sind, das Arbeiten mit Doppelkondensatoren, die alternierend benutzt werden, oder die Verwendung von Spülsystemen. Alle diese Einrichtungen erfordern einen zusätzlichen apparativen Aufwand und bieten nicht die geforderte Betriebssicherheit für eine kontinuierliche Verfahrensweise.

In der DE-A-2503308 wird ein Verfahren zur Herstellung monomerarmer Polyamidschmelzen mit Hilfe einer Evakuiervorrichtung angegeben, das die beschriebenen Schwierigkeiten umgeht, indem monomerreichere Schmelzen bei Drucken oberhalb 8mbar (6 Torr) ausgedampft werden. Dadurch wird sichergestellt, dass die geringen Mengen Dimeres, die mit den grossen Mengen ε-Caprolactam abgedampft werden, in dem entstehenden Kondensat oberhalb von 100°C gelöst bleiben. Nachteil dieses Verfahrens, das auch in der DOS 1720661 beschrieben wird, ist die niedrigere Auslastung der vollkontinuierlich betriebenen, senkrecht stehenden, von oben nach unten durchströmten Polymerisationsrohre, der sogenannten VK-Rohre, durch Einstellen hoher Monomergehalte sowohl im Destillat wie Kondensat und der damit verbundene Energiemehraufwand.

Es wurde nun ein kontinuierliches Verfahren gefunden zur Herstellung von monomer- und dimer-armen Polyamid-6 monomer- und dimerarmen Copolyamiden, die sich zu mindestens 60 Gew.-% aus ε-Caprolactameinheiten aufbauen, durch hydrolytische Polymerisation von ε-Caprolactam und gegebenenfalls weiteren Monomeren in einem Reaktor und anschliessende Ausdampfung der niedermolekularen Gleichgewichts-Reaktionsprodukte und des wegen des sich einstellenden Gleichgewichts zwischen Polymer und Monomer nicht umgesetzten ε-Caprolactams aus der Polycaprolactamschmelze unter Anwendung von Unterdruck und erhöhter Temperatur, wobei die ausgedampften Produkte in der Weise kondensiert werden, dass die beschriebenen Nachteile vermieden werden, d.h. vor allem die cyclischen Dimeren gelöst bleiben. Das Verfahren ist dadurch gekennzeichnet, dass die unter Anlegung eines Vakuums gasförmig abgetrennten Anteile direkt auf der noch zu polymerisierenden ε-Caprolactamschmelze, aus der das Polyamid-6 hergestellt wird, derart kondensiert werden, daß sich kein Dimeres abscheidet und das so erhaltene Gemisch, gegebenenfalls zusammen mit weiteren Monomeren, direkt, ohne Zwischenisolierung dem Reaktor zugeführt wird, wo es polymerisiert wird.

Nach dem erfindungsgemässen Verfahren ist es möglich, (Co-) Polyamid-6-Schmelzen mit niedrigen Extraktgehalten zu erhalten, indem nach der vorzugsweise in einem VK-Rohr durchgeführten Polymerisation bei niedrigen Drucken ausgedampft wird, ohne dass Verstopfungen durch Ablagerungen von Dimeren im Kondensatorsystem den Prozess stören. Der Gehalt an Dimerem in dem im Kondensatorsystem vorhandenen Gemisch aus ausgedampften Produkten und zu polymerisierendem ε-Caprolactam kann nach dem erfindungsgemässen Verfahren in keinem Fall die Löslichkeitsgrenze erreichen und sich abscheiden.

Der Vorteil des erfindungsgemässen Verfahrens ist also einmal darin zu sehen, dass durch die Herstellung monomerarmer (Co-)Polyamid-6-Schmelzen im Reaktor eine maximale Auslastung möglich ist. Zum anderen wird durch die erfindungsgemässe Kondensation der gasförmig abgetrennten Produkte auf der ε-Caprolactamschmelze, die zur Herstellung des Polyamids eingesetzt wird, die Wiedergewinnung des nicht umgesetzten ε-Caprolactams auf einfache Weise ohne zusätzlichen apparativen Aufwand gelöst, ohne dass dabei Störungen des kontinuierlichen Betriebes durch ausfallendes Dimeres zu befürchten sind.

Nach dem erfindungsgemässen Verfahren können Polyamide aus ε-Caprolactam und Copolyamide des ε-Caprolactams mit Aminocarbonsäuren und/oder ihren entsprechenden Lactamen wie 11-Aminoundecansäure, Önanthlactam, Capryllactam oder Laurinlactam, ferner mit Diaminen wie Ethylendiamin, Hexamethylendiamin, Dekamethylendiamin, Dodekamethylendiamin, 2,2,3-und/oder 2,4,4-Trimethylhexamethylendiamin, p- oder m-Xylylendiamin, Bis-(4-aminocyclohexyl)-methan, 3-Aminomethyl-3,5,5-trimethylcycloh-exylamin oder 1,4-Diamino-methylcyclohexan und einer praktisch äquivalenten Menge einer aliphatischen Dicarbonsäure wie Oxalsäure, Adipinsäure, Azelainsäure, Sebazinsäure, Heptadecandicarbonsäure, 2,2,4- und/oder 2,4,4-Trimethyladipinsäure oder aromatische Dicarbonsäuren wie Isophthalsäure oder Telephthalsäure hergestellt werden.

Zur hydrolytischen Polymerisation wird dem Monomer Wasser in Mengen von 0,1 bis 8 %, vorzugsweise von 0,5 bis 3,0 % zugesetzt. Die hydrolytische Polymerisation wird nach bekannten Methoden durchgeführt.

Anstelle des Wassers können auch Wasser abspaltende Mittel wie Aminocarbonsäuren oder Salze aus Diaminen und Dicarbonsäuren, beispielsweise ε-Aminocapronsäure oder AH-Salze,in Mengen von 0,5-10 %, vorzugsweise 1-5 %, zugesetzt werden.

Die Copolyamide sollten zu wenigstens 60 Gew.-%, vorzugsweise zu 80 Gew.-% aus ε-Caprolactameinheiten bestehen.

Bevorzugt eignet sich das erfindungsgemässe Verfahren zur Herstellung von extraktarmen Polyamiden aus ε-Caprolactam.

Für das erfindungsgemässe Verfahren eignen sich alle technisch bekannten Ausdampfanlagen für hochviskose Flüssigkeiten. In einer bevorzugten Ausführungsform werden Dünnschicht oder Schneckenverdampfer eingesetzt.

Als Kondensatoren sind alle möglichen Apparate denkbar, die eine Kondensation von Brüden auf Flüssigkeitsoberflächen gestatten. Bevorzugt werden für das erfindungsgemässe Verfahren Sprüh- oder Rieselfilmkondensatoren verwendet.

Zur Kondensation der Brüden wird erfindungsgemäss die für die Polymerisation notwendige Menge an ε-Caprolactamschmelze ganz oder teilweise verwendet. Nach einer vorteilhaften Ausführungsform wird die im Kondensatorsystem befindliche, temperierte ε-Caprolactamschmelze umgepumpt, bevor sie dem Reaktor zugeführt wird.

Die Temperatur der Polyamid-Schmelze in dem Verdampfer ist in weitem Bereich variabel und von der Verweilzeit abhängig. Es hat sich jedoch gezeigt, dass Temperaturen zwischen 240 und 320° C, vorzugsweise von 250 bis 290° C, günstig sind.

Bei dem erfindungsgemässen Verfahren liegt die Temperatur der ε-Caprolactamschmelze, auf der die gasförmig abgetrennten Produkte kondensiert werden, zwischen 75 und 120° C, vorzugsweise zwischen 75 und 100° C.

Das Vakuum in der Ausdampfanlage wird auf 0,4-6,5 mbar, vorzugsweise 0,4-2,5 mbar eingestellt. Nach unten wird der Druck durch den Schmelzpunkt des ε-Caprolactams begrenzt, bei Drucken oberhalb 6,5 mbar (5 Torr) erhält man durch eine verminderte Ausdampfleistung Produkte, deren technische Verwertbarkeit eingeschränkt ist.

Die Polymerisationstemperatur im Reaktor, vorzugsweise im VK-Rohr, liegt bei 240 bis 280° C.

Die nach dem erfindungsgemässen Verfahren gewonnenen monomer- und dimerarmen Polyamide können nach Verlassen des Reaktors in bekannter Weise direkt versponnen und zu Granulat verarbeitet werden. Sie unterscheiden sich in ihren Eigenschaffen nicht von Polyamiden, die nach den bisher üblichen Verfahren erhalten werden. Sie können daher mit bekannten Additiven, Füll- und Verstärkungsstoffen in üblichen Mengen abgemischt und für alle üblichen Anwendungsgebiete eingesetzt werden, wie z. B. zur Herstellung von Formkörpern nach dem Spritzguss- oder Extrusionsverfahren.

**Beispiel 1**

25kg/h der in einem VK-Rohr durch hydrolytische Polymerisation hergestellten Polycaprolactamschmelze mit 7,5 % Monomer- und 0,53 % Dimergehalt werden in einem Dünnschichtverdampfer durchgesetzt. Das Polyamid hat eine relative Viskosität von 2,78, gemessen in einer 1 %igen Lösung in m-Kresol bei 25°C. Die Temperatur im Dünnschichtverdampfer beträgt 270°C, das Vakuum 1,3 mbar (1 Torr). Die Brüden werden auf der für die Polyamid-6-Herstellung benötigten Menge ε-Caprolactamschmelze kondensiert. Diese wird durch einen Rieselfilmkondensator geschleust und danach direkt dem VK-Rohr zugeführt. In dem Rieselfilmkondensator wird die ε-Caprolactamschmelze mit 2400 l/h umgepumpt und auf 85°C temperiert. Die ausgedampfte Polycaprolactamschmelze enthält 0,19 % Monomeres und 0,11 % Dimeres. Die relative Viskosität beträgt 3,27, gemessen, wie oben beschrieben. Eine Abscheidung von Dimeren wird nicht beobachtet. Die Polycaprolactamschmelze wird in bekannter Weise zu Granulat verarbeitet.

**Beispiel 2**

30 kg/h der in einem VK-Rohr durch hydrolytische Polymerisation hergestellten Polycaprolactamschmelze mit 6,8 % Monomer- und 0,49 % Dimeranteil wird zur Entgasung in einem Doppelwellenextruder durchgesetzt. Das Polyamid besitzt eine relative Viskosität von 2,55, gemessen wie unter 1, beschrieben. Die Temperatur in der Schnecke beträgt 290°C, das Vakuum 1,5 mbar (1,1 Torr). Die Brüden werden auf der für die Polyamid-6-Herstellung benötigten Menge ε-Caprolactamschmelze kondensiert. Diese wird durch einen Sprühkondensator geschleust und danach direkt dem VK-Rohr zugeführt. In dem Sprühkondensator wird die ε-Caprolactamschmelze mit 1500 l/h umgepumpt und auf 87°C temperiert. Die ausgedampfte Polycaprolactamschmelze enthält 0,29 % Monomeres und 0,17 % Dimeres. Die relative Viskosität des Polyamids beträgt 2,98, gemessen wie unter 1, beschrieben. Eine Abscheidung von Dimeren wird nicht beobachtet. Die Polycaprolactamschmelze wird in bekannter Weise zu Granulat verarbeitet.

**Patentansprüche**

1. Kontinuierliches Verfahren zur Herstellung von monomer- und dimerarmen Polyamid-6 bzw. monomer- und dimerarmen Polyamiden, die sich aus mindestens 60 Gew.-% ε-Caprolactameinheiten aufbauen, durch hydrolytische Polymerisation von ε-Caprolactam und gegebenenfalls weiteren Monomeren in einem Reaktor und anschliessender Abtrennung der sich mit dem gebildeten Polyamid im Gleichgewicht befindlichen niedermolekularen Reaktionsnebenprodukte und des nicht umgesetzten ε-Caprolactams aus der Polyamidschmelze unter Anwendung von Unterdruck und erhöhten Temperaturen in einer Ausdampfvorrichtung und Rückführung in den Reaktor, dadurch gekennzeichnet, dass die aus der Polyamidschmelze gasförmig abgetrennten niedermolekularen Reaktionsnebenprodukte und das gasförmig abgetrennte ε-Caprolactam direkt auf der noch zu polymerisierenden ε-Caprolactamschmelze derart kondensiert werden, daß sich kein Dimeres abscheidet und das erhaltene Gemisch gegebenenfalls zusammen mit weiteren Monomeren dem Reaktor zugeführt wird.

2. Verfahren nach Ansprüchen 1 und 2, dadurch gekennzeichnet, dass die ε-Caprolactamschmelze, auf der die gasförmig abgetrennten Reaktionsprodukte und das nicht umgesetzte ε-Caprolactam kondensiert werden, auf eine Temperatur von 75 bis 120°C temperiert werden.

3. Verfahren nach Ansprüchen 1 und 3, dadurch gekennzeichnet, dass in der Ausdampfvorrichtung ein Vakuum zwischen 0,4 bis 6,5 mbar (0,3 und 5-Torr) eingestellt wird.

4. Verfahren nach Ansprüchen 1 bis 4, dadurch gekennzeichnet, dass die auszudampfende Polyamidschmelze in der Ausdampfvorrichtung auf Temperaturen von 240 bis 320°C erwärmt wird.

5. Verfahren nach Ansprüchen 1 bis 5, dadurch gekennzeichnet, dass die gasförmig abgetrennten Produkte und das nicht umgesetzte gasförmig abgetrennte ε-Caprolactam auf der Gesamtmenge der zu polymerisierenden ε-Caprolactamschmelze kondensiert werden.

6. Verfahren nach Ansprüchen 1 bis 6, dadurch gekennzeichnet, dass als Ausdampfanlagen Dünnschicht- oder Schneckenverdampfer verwendet werden.

7. Verfahren nach Ansprüchen 1 bis 7, dadurch gekennzeichnet, dass als Kondensatoren Sprüh- oder Rieselfilmkondensatoren verwendet werden.

8. Verfahren nach Ansprüchen 1 bis 8, dadurch gekennzeichnet, dass das sich im Kondensatorsystem befindliche Gemisch umgepumpt wird, bevor es dem Reaktor zugeführt wird.

**Revendications**

1. Procédé continu pour la fabrication de polyamide-6 pauvre en monomère et en dimère ou de polyamides pauvres en monomères et en dimères, qui sont constitués pour au moins 60 % en poids de motifs ε-caprolactame, par polymérisation hydrolytique d' ε-caprolactame et le cas échéant d'autres monomères dans un réacteur, suivie de séparation de la masse fondue de polyamide des sousproduits de réaction de bas poids moléculaire en équilibre avec le polyamide formé et de l'ε-caprolactame non transformé, avec utilisation d'une dépressiom et de températures élevées dans un appareil d'évaporation et recyclage dans le réacteur, caractérisé en ce que les sous-produits de bas poids moléculaire de la réaction et l'ε-caprolactame séparés sous forme gazeuse sont condensés directememt sur la masse fondue d' ε-caprolactame encore à polymériser de telle sorte qu'il ne se dépose pas de dimère et le mélange obtenu est recyclé au réacteur, le cas échéant avec d'autres monomères.

2. Procédé selon la revendication 1, caracterise en ce que la masse fondue d'ε-caprolactame sur laquelle sont condensés les produits de réaction séparés sous forme gazeuse et l'ε -caprolactame non transformé sont mis en équilibre à une température de 75 à 120°C.

3. Procédé selon les revendications 1 et 2, caractérisé en ce que l'on ajuste dans l'appareil d'évaporation un vide compris entre 0,4 et 6,5 mbar (0,3 et 5 torr).

4. Procédé selon les revendications 1 à 3, caractérisé en ce que la masse de polyamide à évaporer dans l'appareil d'évaporation est chauffée à des températures de 240 à 320°C.

5. Procédé selon les revendications 1à 4, caractérisé en ce que les produits séparés à l'état gazeux et l'ε -caprolactame séparé à l'état gazeux non transformé sont condensés sur la quantité totale de la masse fondue d'ε - caprolactame à polymériser.

6. Procédé selon les revendications 1 à 5, caractérisé en ce que l'on utilise comme appareils d'évaporation des évaporateurs à couche mince ou à vis.

7. Procédé selon les revendications 1 à 6, caractérisé en ce que l'on utilise comme condenseurs des condenseurs à projection ou à film ruisselant.

8. Procédé selon les revendications 1 à 7, caractérisé en ce que le mélange se trouvant dans le système condenseur est mis en circulation par une pompe avant de le renvoyer au réacteur.

## Claims

1. Continuous process for the production of low-monomer and low-dimer polyamide-6 and low-monomer and low-dimer polyamides of which at least 60 % by weight consist of ε-caprolactam units by hydrolytic polymerisation of ε-caprolactam and optionally other monomers in a reactor and subsequent separation of the low molecular weight secondary reaction products which are in equilibrium with the polyamide formed and of the unreacted ε -caprolactam from the polyamide melt using reduced pressure and elevated temperatures in an evaporator and reintroduction into the reactor, characterised in that the low molecular weight secondary reaction products separated off in the gas phase from the polyamide melt and the ε-caprolactam separated off in the gas phase are condensed directly on the ε -caprolactam melt still to be polymerised in such a manner that no dimer is deposited and the resulting mixture is delivered to the reactor optionally together with other monomers.

2. Process according to Claim 1, characterised in that the ε-caprolactam melt, on which the reaction products separated off in the gas phase and the unreacted ε -caprolactam are condensed are tempered to a temperature of 75 to 120°C.

3. Process according to Claims 1 and 2, characterised in that a vacuum of 0.4 to 6.5 mbars (0.3 and 5 Torr) is adjusted in the evaporator.

4. Process according to Claims 1 to 3, characterised in that the polyamide melt to be evaporated is heated to temperatures of 240 to 320°C in the evaporator.

5. Process according to Claims 1 to 4, characterised in that the products separated off in the gas phase and the unreacted ε-caprolactam separated off in the gas phase are condensed on the total quantity of ε -caprolactam melt to be polymerised.

6. Process according to Claims 1 to 5, characterised in that thin-layer evaporators or screw evaporators are used as the evaporators.

7. Process according to Claiis 1 to 6, characterised in that spray or trickle-film condensers are used as condensers.

8. Process according to Claims 1 to 7, characterised in that the mixture present in the condenser system is recirculated by pumping before being delivered to the reactor.